# EUROPEAN PATENT APPLICATION

(11) **EP 1 615 052 A1**
(43) Date of publication of application: **11.01.2006**
(21) Application number: 04425494.4
(22) Date of filing: 06.07.2004
(51) Int. Cl.: G01S 17/42

(54) **Process for estimating position of objects in regions, related system and computer program product therefor**

(71) Applicant: STMicroelectronics S.r.l., 20041 Agrate Brianza (Milano) (IT)
(72) Inventor: Lo Presti, Matteo, 95045 Misterbianco (Catania) (IT); Ando', Bruno, 95028 Valverde (Catania) (IT); Graziani, Salvatore, 95122 Catania (IT); Pitrone, Nicola, 95131 Catania (IT)
(74) Representative: Bosotti, Luciano

(57) **Abstract**

Described herein is a process for estimating membership regions of objects in non-structured environments, of the type that envisages the operations of:
- sending scanning signals (S) in the direction of one or more objects (O);
- receiving reflected signals (I) from said one or more objects (O);
- analysing characteristics (f1, f2, f3) of said reflected signals (I) with respect to characteristics (f1, f2, f3) of said scanning signals (S) to obtain information on a membership region (d, DR) of said one or more objects (O) in said environments,
said process being characterized in that
- said operation of sending scanning signals (S) envisages sending a plurality of scanning signals (S1, S2, S3) associated to a plurality of different frequencies (f1, f2, f3); and
- said operation of analysing characteristics (f1, f2, f3) of reflected signals (I) envisages selecting components (U1, U2, U3) of said reflected signals (I) with respect to said plurality of different frequencies (f1, f2, f3).

## Description

### Field of the invention

The present invention relates to techniques for estimating the membership region of an object in a non-structured environment and has been developed with particular attention paid to its possible application to systems for estimating the position of an object for persons with disabilities, such as the blind.

Even though in what follows, for reasons of clarity and simplicity of exposition, reference will be made principally to this application, it should in any case be borne in mind that the scope of the invention is more general. It may in fact be applied to all systems for estimating the position of an object in which there arise operating conditions of the sort described in what follows: by way of non-exhaustive example, it is possible to cite systems for home automation, industrial processes, general-purpose devices, robotics, and ESSVI.

### Description of the known art

Systems commonly used for estimating the position of an object in non-structured environments are based upon techniques of image processing such as video systems and CCD sensors. From the project VIDET (VIsual DEcoder by Touch), described, for example, in the publication by Bonivento C., Di Stefano.L., Ferri M., Melchiorri C. and Vassura G. *"The VIDET project: basic ideas* and earlier results", Proc. ICAR '97, Monterey, July 7-9, 1997, there is known a device capable of encoding in a tactile manner the information corresponding to the structure in an environment of any complexity.

There are moreover known sensorial devices capable of mapping the information corresponding to the distance from objects with respect to one or more continuously variable quantities. Said systems use ultrasound or infrared sensors, which are based upon estimating the time of flight of, or attenuation undergone by, the signal reflected by the object, or target, as the distance from said target varies. A system of this sort is described, for example, in the publication by P. Blenkhorn, S. Pettitt and D. Gareth Evans, *"An Ultrasonic Mobility Device with Minimal Audio Feedback",* Center On Disabilities, Technology and Persons with Disabilities Conference 1997.

The performance of the systems cited above is, however, affected on account of the sensitivity that said systems have in regard both to the type of target, for example according to the material that constitutes said target, and to the external variables of influence typical of the environment in which the system operates, such as for example the lighting of said environment.

### Purposes and summary of the invention

The purpose of the present invention is to provide a solution that will be as insensitive as possible to the type of target and to the external influence variables of the operating environment.

According to the present invention, said purpose is achieved thanks to a process having the characteristics referred to specifically in the ensuing claims. The invention also relates to the corresponding system, as well as to the corresponding computer-program product, directly loadable into the memory of a computer such as a processor and comprises software code portions for performing the process according to the invention when the product is run on a computer.

Basically, the solution according to the invention envisages using a plurality of transmitters operating at different frequencies for radiating a corresponding plurality of scanning signals at different frequencies in the operating environment and arranging a plurality of receivers for receiving the signals reflected from the targets. There are then envisaged appropriate strategies for processing said reflected signals received by said receivers for the purpose of obtaining information on the position of the target. Furthermore, said process involves the emission and reception of radiation in the form of optical cones, so that the information on the point position of the target can be readily extended to information on the membership region thereof.

### Brief description of the annexed drawings

The invention will now be described, purely by way of non-limiting example, with reference to the annexed drawings, in which:
- Figure 1 represents a schematic diagram of a system according tq the present invention;
- Figure 2 represents schematically a first detail of the system represented in Figure 1;
- Figure 3 represents schematically a second detail of the system represented in Figure 1;
- Figure 4 represents a diagram illustrating operation, in a first operating mode, of the system represented in Figure 1;
- Figure 5 represents a diagram illustrating operation, in a second operating mode, of the system of Figure 1;
- Figure 6 represents a first diagram illustrating a process implemented by the system of Figure 1;
- Figure 7 represents a diagram illustrating variables used by the process implemented by the system of Figure 1;
- Figure 8 represents a second diagram illustrating the process implemented by the system of Figure 1;
- Figure 9 represents a third diagram illustrating the process implemented by the system of Figure 1.

### Detailed description of examples of embodiment of the invention

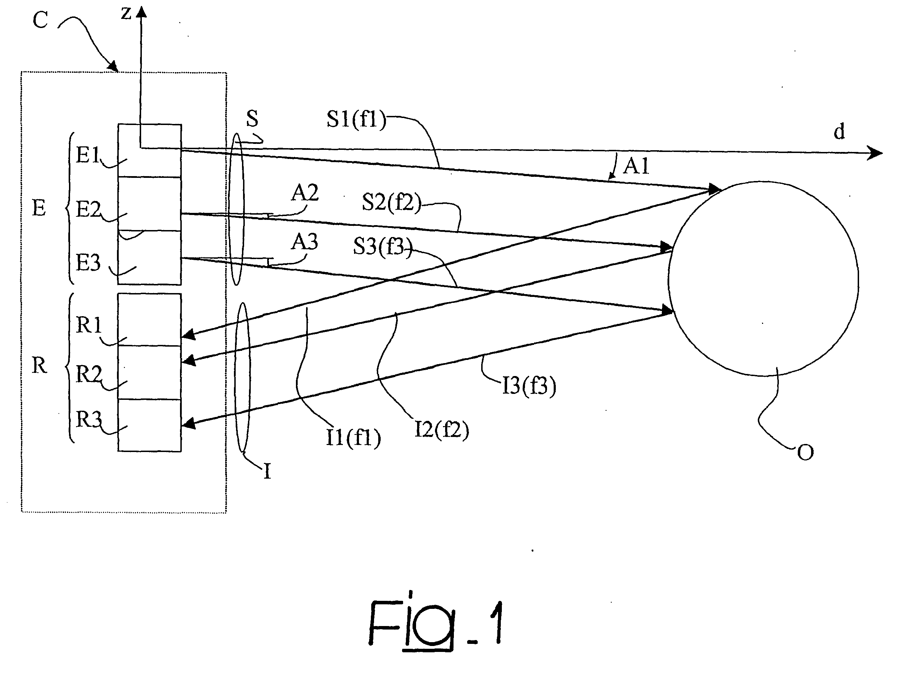

Figure 1 is a schematic illustration of a system for estimating membership regions of objects which implements the process according to the invention. Said system, indicated as a whole by the reference C, substantially comprises a first array or matrix of transmitters E, and a second array of receivers R, arranged at two different heights. The first array of transmitters E comprises a plurality of infrared transmitters designated respectively by E1, E2, and E3. Said transmitters E1, E2, E3 are designed to emit encoded information in the form of frequency tones appropriately separated from one another.

Since the main purpose of the proposed system is to identify the distance of the objects with respect to said estimation system C, irrespective of their nature and constitutive characteristics, for the purpose of obtaining such a result, it is not possible to resort to an analysis of the information corresponding to the amplitude of the reflected signal in order to obtain the information corresponding to the distance of the object, in so far as the amplitude of the signal is strictly linked to the nature of the material of which said object is made. Consequently, the transmitters E1, E2, E3 transmit respective scanning signals S1, S2, S3 (collectively indicated as scanning signals S), constituted by radiation in the range of the infrared, which operate at respective frequencies f1, f2, f3, known and different from one another, in the direction of a target, or object, designated by the reference O. Also known are angles of inclination A1, A2, A3, formed by the direction of each of said scanning signals S1, S2, S3 with respect to an axis along which a distance d is measured of the object O with respect to the axis along which a distance d is measured by the system C. Said scanning signals S1, S2, S3 at the respective frequencies f1, f2, f3 are reflected by the object O as signals identifying the position of the object I1, I2, I3, respectively. Such signals, which identify the position of the object I1, I2, I3 (collectively indicated as identifying signals I) are received by receivers R1, R2, R3 belonging to the second array of receivers R.

Represented in Figure 2 is a block diagram of the transmitter E1. Said transmitter E1 substantially comprises a signal generator 11, which emits a square-wave signal, at the frequency f1, to a signal-conditioning stage 12, the output of which is connected to an infrared emitter 13 for radiating the scanning signal S1 at the frequency f1. Said radiated scanning signal S1 consequently corresponds to a square wave at the frequency f1. The infrared emitter 13 consists simply of one or more infrared-emitting diodes, the power of emission of which is chosen according to the particular application.

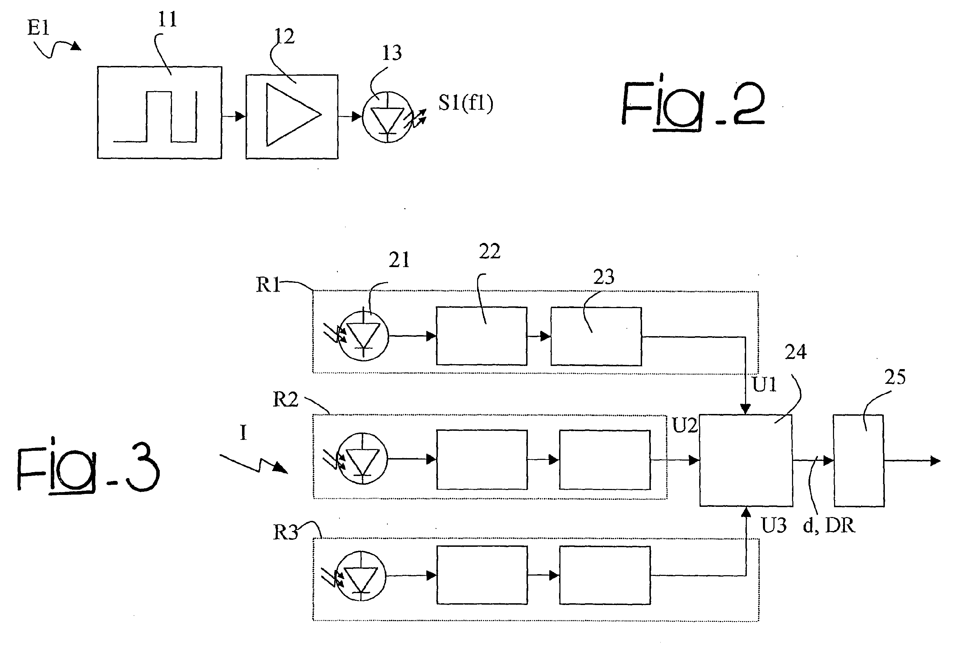

Figure 3 represents the second array of receivers R comprising the receivers R1, R2, R3, each of which comprises a respective infrared sensor 21 for detecting the infrared radiation corresponding to the signals I identifying the position of the object O. Downstream of each infrared sensor 21 is a selective amplifier 22, followed by a corresponding filtering section 23, which comprises phase-locked-loop (PLL) circuits for identification of the source, i.e., the transmitter E₁, E2, or E3, from which there originates the signal received I1, I2, or I3 identifying the position of the object. There are hence present three PLL circuits for each of the three receivers R1, R2 and R3, which are tuned to the frequencies f1, f2 and f3, respectively.

Each of the three filtering sections 23 supplies an own output signal U1, U2, U3 to a system for analysis and evaluation 24, which implements the analysis procedures for extracting the information on the distance d and a membership region DR. In Figure 3 there is then illustrated an appropriate user interface 25, connected to said analysis-and-evaluation system 24.

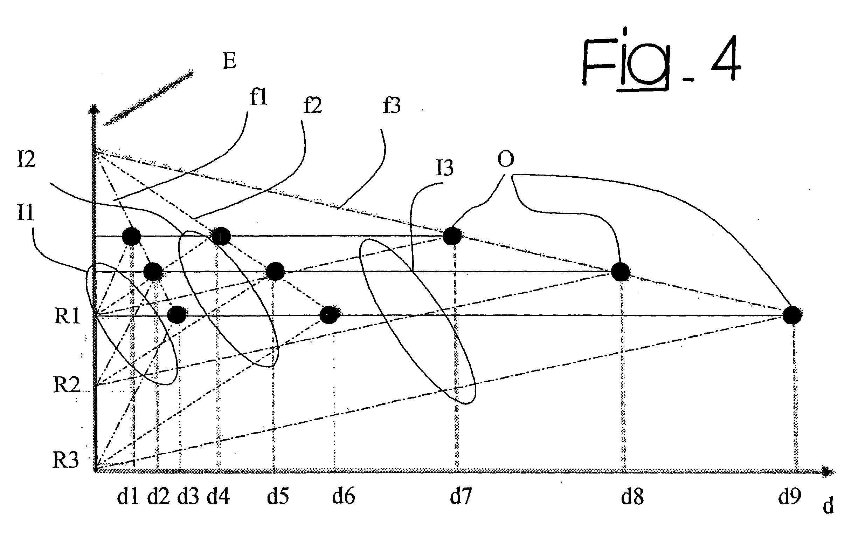

For greater clarity, Figure 4 shows a diagram, presenting on the ordinate the distance d and on the abscissa the height z, which constitutes a map illustrating a grid of the signals I identifying the position of the object according to a distance d from the transmitters E and receivers R.

Figure 4 represents a first operating mode of the estimation system C, in which the optical emission of the transmitters E1, E2 and E3 is point-like and gives rise to position-identification signals I of a point-like type, which reach just one receiver.

Consequently, the circles appearing in Figure 4 represent, as a function of the distance d, the nominal positions of the object O identifiable in the case of point optical emission, i.e., those positions that give rise to a reflection in the direction of one of the receivers R1, R2, or R3. There are thus illustrated nine circles in Figure 4, each corresponding to a different position of the target O, to a respective distance d1 ... d9, which gives rise to a reflection of the signal S1 or S2 or S3 in the direction of the receiver R1 or R2 or R3.

Hence, it emerges clearly from Figure 4 that each output signal U1, U2, U3 consists substantially of three components, which correspond, respectively, to the frequencies f1, f2 and f3 and which, in the example described herein, will hence constitute a matrix of nine components, in which each row corresponds to a receiver and to the respective output signal and each column corresponds to a frequency, f1, f2 and f3. Such components may simply have a binary value. Such matrix, in the case where the object O is at the distance d9 indicated in Figure 4, is:

| | *f*1 | *f*2 | *f*3 |
|---|---|---|---|
| *U*1 | 0 | 0 | 0 |
| *U*2 | 0 | 0 | 0 |
| *U*3 | 0 | 0 | 1 |

The processing strategy is therefore based upon the simultaneous analysis of the states (and of the signals) corresponding to the three receivers.

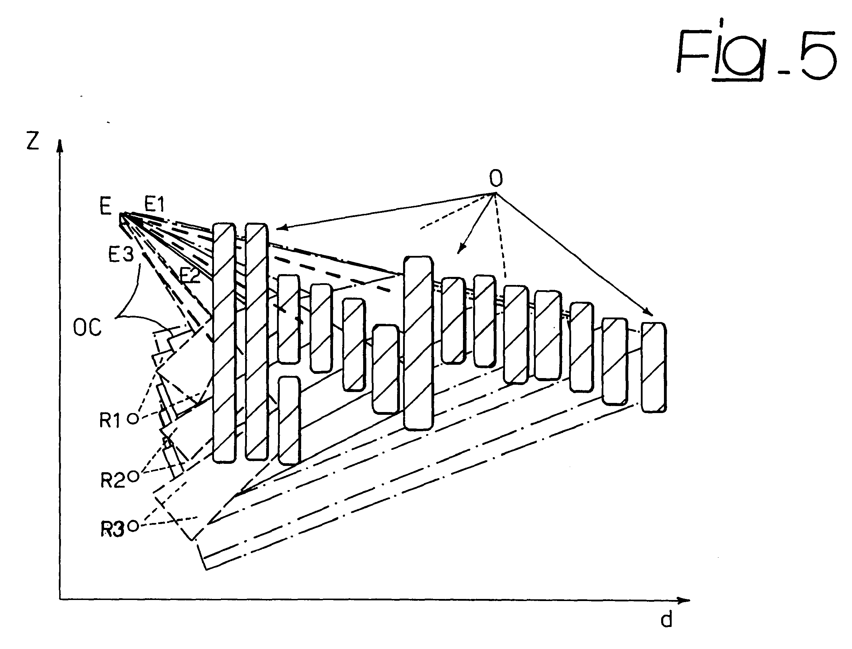

Represented in Figure 5 is a diagram, which is similar to the diagram of Figure 4 in so far as it presents on the ordinate the distance d and on the abscissa the height z but illustrates a second operating mode of the estimation system C, in which the optical emission of the transmitters E1, E2 and E3 is in the form of an optical cone OC, and gives rise, in reflection, to position-identification signals I, once again of a conical type, which can hence impinge upon a number of receivers. Figure 5 consequently represents a map of a grid of optical cones OC identifying a membership region DR of the target O. In other words, the transmitters E1, E2, E3 transmit the infrared radiation in the form of optical cones OC with a predefined angle of aperture.

The rectangles illustrated in Figure 5 have a meaning similar to that of the circles in Figure 4, i.e., they represent different membership regions DR, in which the target O can be found and be detected. In fact, in this case, the possible combinations of reflections according to which the signals I identifying the position of the object reach the receivers R1, R2, R3, increase, both because each scanning signal S1, S2, or S3, emitted by the transmitters E1, E2, or E3, can be reflected so as to impinge upon a number of receivers R1, R2, R3, and because the reflection is modified according to the position (for example, the vertical or horizontal position) of the target O.

As a result of the use of scanning signals S that determine optical cones OC in transmission and reception, the information on the point position of the target O can thus be readily extended to information on the membership region DR of said object O. In other words, the object O can be located by the estimation system C not only when it is found in the nominal positions of Figure 4 at distance d, but when it is found in the membership regions DR identified by the rectangles illustrated in Figure 5. Of course, the aforementioned matrix that represents the output signals U1, U2, U3 may in this modality have a number of elements different from zero, and it is also possible to evaluate the amplitude of each component of frequency f1, f2 or f3 received at the receiver R1, R2 or R3.

Processing of the output signals U1, U2, U3 is entrusted to a procedure, implemented in the analysis-and-evaluation system 24, based upon the co-operation of two different classification strategies.

A first classification strategy is of a crisp type, or discrete-variable type, and envisages the use of a classification procedure which, on the basis of the information returned by the receivers R, i.e., the values of the output signals U1, U2, U3 interpreted as encoding values CD, yields an estimate of the range of distances d or membership region DR, in which it is admissible for the object O to be found.

Said crisp classification procedure envisages an operation of tabular mapping, in which to the encoding values CD there are made to correspond distances d or membership regions DR.

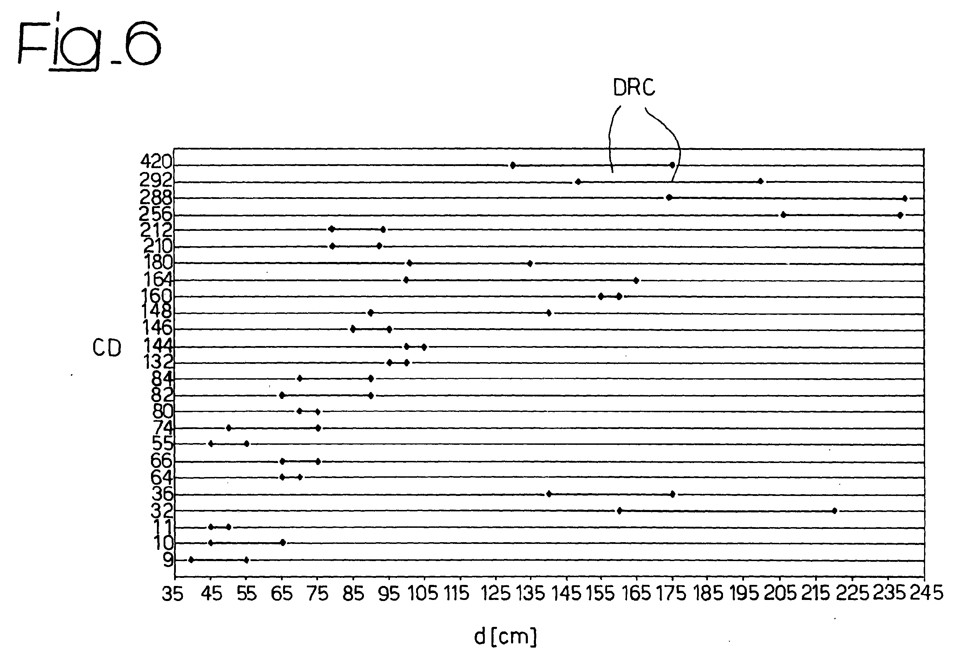

Figure 6 presents a diagram exemplifying the response of said crisp classification procedure, which associates to each encoding value CD a crisp membership region DRC in which it is admissible for the object O to be found.

A second classification strategy is based upon a procedure of calculation of a non-linear or fuzzy-logic type, which is able to classify certain non-identifiable membership regions using the crisp classification strategy.

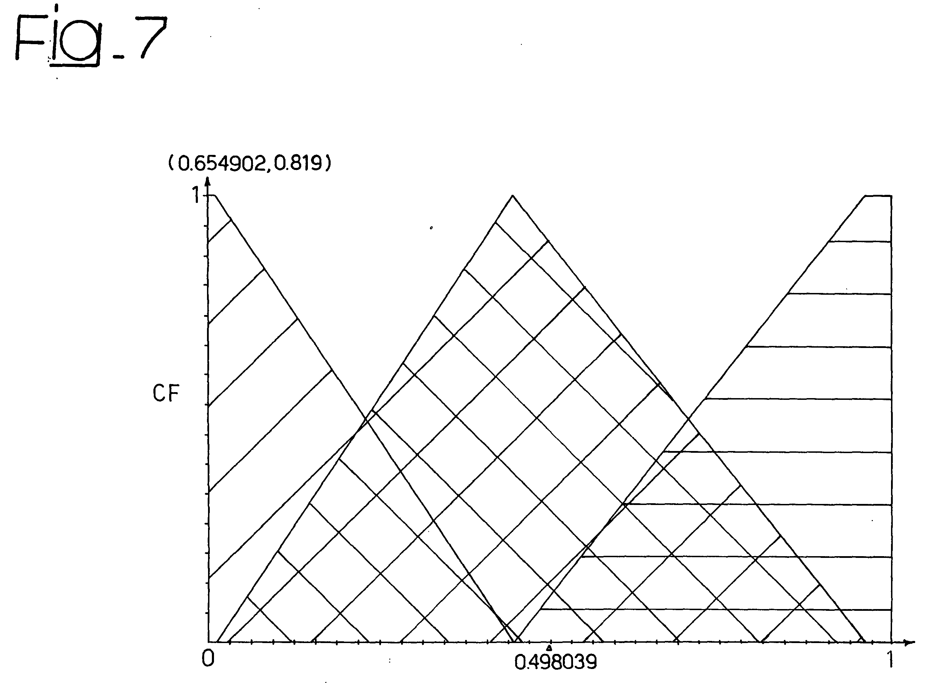

Figure 7 provides an example of a set of fuzzy variables, or fuzzy set, associated to one of the input variables of the fuzzy model to obtain the fuzzy encoding values CF.

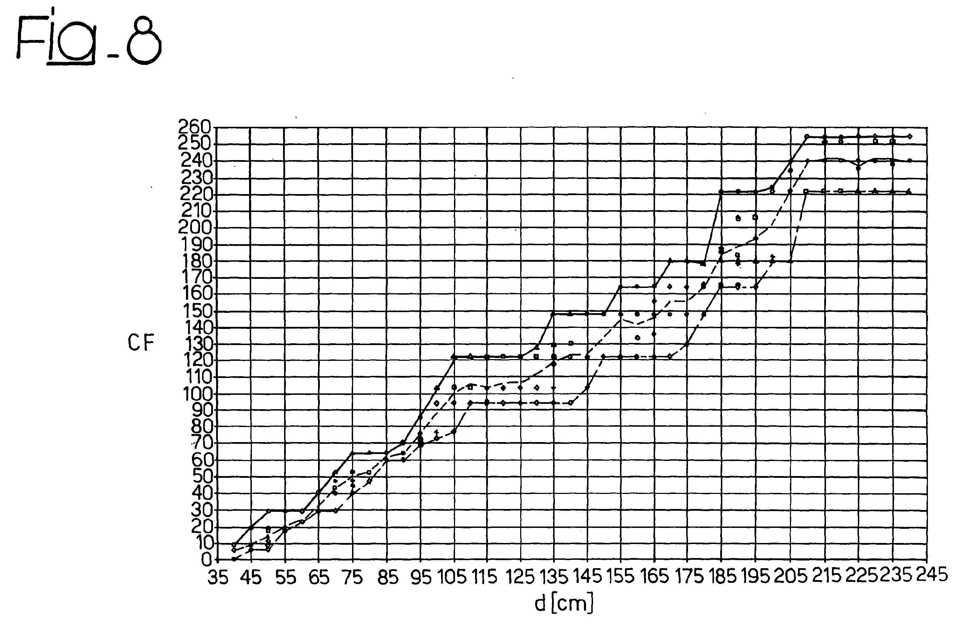

The response of a fuzzy classification procedure of this sort, which associates to each fuzzy encoding value CF a certain range of distances d, i.e., a fuzzy membership region DRF, in which it is admissible for the object O to be found, is given in Figure 8.

The level of the signal at output from the sensors is normalized in the range 0-5 V (0-255).

The different curves in Figure 8 represent the response of the system (i.e., encoding of the distance) in different operating conditions (type of material of the target, conditions of illumination, etc.).

It should be noted that, in the case where the crisp classification procedure manages to provide indications corresponding to the crisp membership region DRC with a high level of confidence, it is preferable to use the information coming from said crisp procedure, rather than the information yielded by the fuzzy, non-linear, calculation procedure.

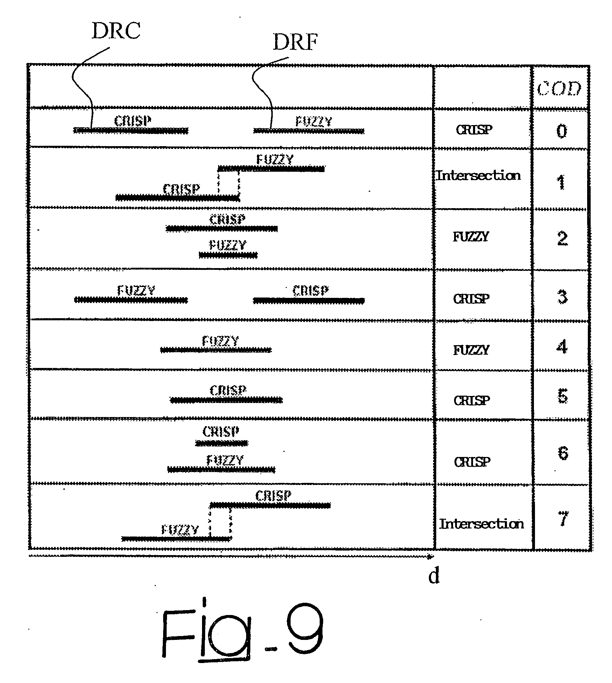

By means of appropriate techniques of data fusion, an example of which is given in the table appearing in Figure 9, it is possible to optimize the performance of the system proposed in terms of repeatability and robustness both to the variations of the parameters of influence of the external environment and to the type of the object O.

Figure 9 is a tabular representation of a set of decision-making rules, distinguished by a decision code COD, for the fusion of the results of the two classification procedures, respectively crisp and fuzzy.

The first column of said tabular representation represents graphically the positions corresponding to the crisp membership region DRC and to the fuzzy membership region DRF identified. The second column represents the decision taken, whilst the third column contains the corresponding decision code COD.

For example, if the crisp classification procedure identifies a crisp membership region DRC not intersecting a fuzzy membership region DRF, determined by the fuzzy classification procedure, and at a distance smaller than said fuzzy membership region DRF, the decision code is equal to 0, indicating that the crisp membership region DRC is chosen. Instead, if it is the fuzzy membership region DRF that is at a smaller distance, the crisp membership region DRC is chosen, with the decision code 3.

If the crisp classification procedure identifies a crisp membership region DRC intersecting the fuzzy membership region DRF determined by the fuzzy classification procedure, the decision code is equal to 1 or 7, according to which between the membership regions DRC and DRF is at a smaller distance, and the segment of intersection between said membership regions DRC and DRF is chosen as membership region.

If the fuzzy membership region DRF is contained entirely in the crisp membership region DRC, the decision code COD is equal to 2, and the fuzzy membership region DRF is chosen. Instead, if the fuzzy membership region DRF comprises entirely the crisp membership region DRC, the decision code COD is equal to 6, and the crisp membership region DRC is chosen.

The decision codes COD 4 and 5 identify, respectively, the case in which there is available just the fuzzy membership region DRF and the case in which there is available just the crisp membership region DRC.

As already mentioned, in Figure 3, there is then illustrated an appropriate user interface 25 connected to the analysis-and-evaluation system 24. Said user interface 25 may differ considerably according to the application chosen. For example by means of a protocol of the serial type, normally managed by the microcontroller of the analysis-and-evaluation system 24, it is possible to transfer the results of the processing operations executed by the analysis-and-evaluation system 24 to any peripheral that supports the same protocol. In a more specific context of application, it is possible to employ a type of user interface 25, such as a display, or else a tactile device, on which a qualification of the membership region identified is reproduced, said user interface 25 being connected to the measurement system by means of an appropriate set of digital and/or analog output channels of the microcontroller of the analysis-and-evaluation system 24. The process and the system proposed consequently enable a robustness to be achieved with respect to the material of the object, or target, and to the external factors of influence, which represent characteristics of primary importance in all those applications where reliability assumes a priority role as against a high resolution in the measurements of the distance.

In particular, the process and the system proposed enable optimization of the cost/performance ratio: in fact, the structures of signal emission and of detection and conditioning of the signals present a contained cost, whilst at the same time advanced techniques of processing of the signal are used. An approach of this sort enables an overall reduction in the costs of the device and an optimization of the performance in terms of reliability and repeatability of the measurements.

Of course, without prejudice to the principle of the invention, the details of construction and the embodiments may vary widely with respect to what is described and illustrated herein, without thereby departing from the scope of the present invention, as defined by the annexed claims.

## Claims

1. A process for estimating membership regions of objects in non-structured environments, of the type that envisages the operations of:
- sending scanning signals (S) in the direction of one or more objects (O);
- receiving reflected signals (I) from said one or more objects (O);
- evaluating characteristics of said reflected signals (I) with respect to characteristics of said scanning signals (S); and
- estimating a membership region (d; DR) of said one or more objects (O) in said environments according to said step of evaluation of characteristics,
said process being **characterized in that**
- said operation of sending scanning signals (S) envisages sending a plurality of scanning signals (S1, S2, S3) associated to a plurality of different frequencies (f1, f2, f3) and to a plurality of different directions (A1, A2, A3);
- said operation of receiving reflected signals (I) envisages receiving said reflected signals at a plurality of receivers (R1, R2, R3), which are spatially separated from one another and which give rise to distinct output signals (U1, U2, U3); and
- said operation of evaluating (24) characteristics (f1, f2, f3) of reflected signals (I) envisages selecting in said distinct output signals (U1, U2, U3) components of said reflected signals (I) associated to said different frequencies (f1, f2, f3).

2. The process according to Claim 1, **characterized in that** said evaluation operation (24) comprises a step of encoding said components of said reflected signals (I) in encoding values (CD, CF).

3. The process according to Claim 2, **characterized in that** it comprises the operation of associating to said encoding values (CD, CF) said membership regions (d; DR) of one or more objects (O).

4. The process according to Claim 3, **characterized in that** said encoding values (CD, CF) comprise discrete encoding values (CD).

5. The process according to Claim 3 or Claim 4, **characterized in that** said encoding values (CD, CF) comprise fuzzy encoding values (CF).

6. The process according to any one of Claims 3 to 5, **characterized in that** said operation of associating to said output variables (CD, CF) the membership regions (d; DR) of said one or more objects (O) envisages the co-operation of a first procedure of discrete-variable classification and of a second procedure of classification of a fuzzy type.

7. The process according to Claim 6, **characterized in that** said first procedure of discrete-variable classification comprises associating an estimation of a first membership region (DRC), in which it is admissible for the target (O) to be found on the basis of the discrete encoding values (CD), via an operation of tabular mapping.

8. The process according to Claim 6 or Claim 7, **characterized in that** said second fuzzy classification procedure comprises associating to each value assumed by the fuzzy variables (CF) a second membership region (DRF), in which it is admissible for the object (O) to be found.

9. The process according to any one of Claims 6 to 8, **characterized in that** it comprises a procedure of decision-making between said first membership regions (DRC) estimated by said first procedure of discrete-variable classification and said second membership regions (DRF) estimated by said second procedure of classification of a fuzzy type.

10. The process according to at least one of the preceding claims, **characterized in that** said operations of sending scanning signals (S) in the direction of one or more objects (O) comprise sending said scanning signals (S) in the form of optical cones (OC).

11. The process according to at least one of Claims 1 to 9, **characterized in that** said operations of sending scanning signals (S) in the direction of one or more objects (O) comprise sending said scanning signals (S) in the form of point emissions.

12. A system for estimating membership regions of objects in non-structured environments, of the type that comprises: a module for transmission (E) of scanning signals (S) in the direction of one or more objects (O); a module for reception (R) of reflected signals (I) from said one or more objects (O); and a module for evaluation (24) of characteristics of said reflected signals (I) with respect to characteristics of said scanning signals (S), configured for evaluating information on a membership region (d; DR) of said one or more objects (O) in said environments,
said system being **characterized in that**
- said module for transmission (E) of scanning signals (S) is configured for sending a plurality of scanning signals (S1, S2, S3) associated to a plurality of different frequencies (f1, f2, f3) and to a plurality of different directions (A1, A2, A3);
- said reception module (R) comprises a plurality of receivers (R1, R2, R3) which are spatially separated and which give rise to distinct output signals (U1, U2, U3); and
- said module for analysis (24) of characteristics of said reflected signals (I) with respect to characteristics (f1, f2, f3) of said scanning signals (S) is configured for selecting, in said distinct output signals (U1, U2, U3), components of said reflected signals (I) associated to said different frequencies (f1, f2, f3).

13. The system according to Claim 12, **characterized in that** said evaluation module (24) is configured for encoding said components of said reflected signals (I) according to encoding values (CD, CF).

14. The system according to Claim 13, **characterized in that** it comprises the operation of associating to said encoding values (CD, CF) the membership regions (d; DR) of the object.

15. The system according to any one of Claims 11 to 14, **characterized in that** said evaluation module (24) implements a procedure for associating to said encoding values (CD, CF) the membership regions (DR, d) of the object, said procedure comprising the co-operation of a first procedure of discrete-variable classification and of a second procedure of classification of a fuzzy type.

16. The system according to any one of Claims 11 to 15, **characterized in that** said evaluation module (24) comprises tables for mapping said output variables (CD, CF) with respect to membership regions (DRC, DRF) of the object (O).

17. The system according to any one of Claims 11 to 16, **characterized in that** said scanning signals (S) are square-wave signals.

18. The system according to at least one of Claims 11 to 17, **characterized in that** said scanning signals (S) consist of radiation in the infrared field.

19. The system according to at least one of Claims 11 to 18, **characterized in that** said receivers (R1, R2, R3) comprise phase-locked loops (23), tuned to each of said frequencies (f1, f2, f3).

20. The system according to at least one of Claims 11 to 19, **characterized in that** it further comprises a user interface (25) for reproducing the membership regions identified by the evaluation module (24).

21. A computer-program product directly loadable into the memory of a digital computer and comprising software code portions for performing the steps of the process according to any one of Claims 1 to 11 when the a computer-program product is run on a digital computer.
